# FASCICULE DE BREVET EUROPEEN

(11) **EP 0 732 518 B1**
(45) Date de publication et mention de la délivrance du brevet: **28.10.1998**
(21) Numéro de dépôt: 96400317.2
(22) Date de dépôt: 15.02.1996
(51) Int. Cl.: F16D 3/32, F16B 17/00

(54) **Joint homocinétique à rotule centrale**
Homokinetisches Gelenk mit Kugelgelenk
Homokinetic joint with central ball

(30) Priorité: 20.02.1995 FR 9501936
(43) Date de publication de la demande: 18.09.1996
(73) Titulaire: LEMFÖRDER NACAM SA, 41100 Vendôme (FR)
(72) Inventeur: Fevre, Laurent, F-41100 Saint-Sulpice (FR); Bodin, Jean-Christophe, F-41100 Vendome (FR); Bouguerra, Amar, F-41000 Blois (FR); Sevault, Bernard, F-41100 Vendome (FR); Le Du, Gérard, F-41000 Vendome (FR)
(74) Mandataire: Michelet, Alain

(56) Documents cités:
- EP-A- 0 559 542
- DE-A- 2 854 232
- DE-C- 664 786
- FR-A- 2 157 181
- GB-A- 2 089 471
- GB-A- 2 098 888
- GB-A- 2 107 826
- US-A- 3 029 618
- US-A- 3 301 008
- US-A- 4 207 757

## Description

La présente invention concerne les joints homocinétiques et se rapporte plus particulièrement aux joints homocinétiques à rotule centrale, spécialement ceux destinés à relier deux arbres d'une colonne de direction de véhicule automobile.

Les transmissions des colonnes de direction utilisent souvent des joints de cardan entre l'arbre portant le volant et l'arbre supportant le pignon de crémaillère. Ces transmissions peuvent comporter un ou plusieurs cardans, mais les plus répandues comportent deux cardans.

Du fait de sa cinématique particulière, le cardan crée un défaut d'homocinétie entre la vitesse de rotation de l'arbre supportant le volant et la vitesse de rotation de l'arbre supportant le pignon de crémaillère. Ce défaut est d'autant plus grand que l'angle de fonctionnement du cardan est grand. Dans une transmission à plusieurs cardans, et en particulier dans une transmission à deux cardans, on assemble les cardans pour que leurs défauts d'homocinétie respectifs se compensent, au moins partiellement, de telle sorte que le défaut total soit acceptable. Cependant, dans le cas de transmissions à un seul cardan sous angle de fonctionnement élevé ou même dans le cas de transmissions à deux cardans, ayant des angles de fonctionnements respectifs très différents, le défaut d'homocinétie résultant ne peut être suffisamment compensé et demeure inacceptable. Il est alors nécessaire d'utiliser un joint homocinétique.

On appelle joint homocinétique un système permettant de transmettre un mouvement d'un arbre menant à un arbre mené sans décalage angulaire de rotation, quel que soit l'angle de ces deux arbres entre eux. Un joint homocinétique à rotule centrale est composé d'un double joint de cardan, et d'une rotule assurant la liaison entre les deux joints. La rotule permet d'imposer à chaque joint de cardan un angle de fonctionnement sensiblement équivalent. Compte-tenu de la distance fixe entre les deux joints de cardan, l'homocinétie parfaite n'est réalisée que pour l'angle nul et pour un angle déterminé par construction. On sait aussi que, pour un tel joint, le décalage angulaire maximal correspond à une valeur négligeable comparée aux jeux, aux élasticités et aux tolérances de fabrication des pièces. De tels joints homocinétiques, à rotule centrale, sont par exemple décrits dans les documents FR-A-2.512.139 et FR-2-.402.803.

Le document GB-A-2.107.826 concerne un joint de transmission de mouvement entre deux arbres. Il comporte des éléments 11, 12 fixés sur les fourchettes des deux joints de cardan 3, 8 à l'aide de rivets 26. L'élément 12 comporte une sphère dont le centre de rotation se trouve au milieu du joint homocinétique double; ledit élément 12 étant fixé par des rivets à l'intérieur de la fourchette 8. L'élément 11 comporte un guide cylindrique recevant la sphère; ledit élément 11 est fixé par des rivets à l'intérieur de la fourchette 3. Le dispositif, lors d'une inclinaison des deux arbres 2,7 permet un déplacement relatif de la sphère 24 dans l'alésage de la partie 11. Ce document antérieur ne décrit pas un joint comportant un fourreau dans lequel la sphère est mobile. En outre, l'usinage et le montage du joint antérieur sont compliqués et donc coûteux.

Le document US-A-3.301.008 concerne des moyens de centrage pour un joint universel double. Il comporte d'un côté un goujon muni d'une sphère fixée dans l'axe d'une fourchette, la sphère étant réglée pour être au centre du joint double et de l'autre côté un tube intégré à la fourchette; le tube entourant la sphère. Les deux croisillons 12, 16 sont reliés à l'aide d'une pièce intermédiaire 14.

Ce dispositif connu utilise une pièce usinée 10 maintenant le croisillon 12 et entourant la sphère 24. Il indique aussi que des patins de centrage sont disposés entre le tube 68 et la sphère 24 ainsi que la présence d'un système de rattrapage de jeu avec ressort. Le système utilisé dans ce document est compliqué à usiner et à assembler.

Le document EP-A-0.559.542 concerne un accouplement monobloc réalisé à partir d'une tôle et constitué de trois zones: une zone de liaison avec l'organe transmetteur de couple, une zone intermédiaire dont les profils complémentaires s'emboîtent et une zone de liaison avec l'organe récepteur. Ce document antérieur ne fait aucunement état d'un double cardan avec-pièce de liaison, deux joints et des pièces intermédiaires possédant une sphère d'une part, et un élément femelle recevant un fourreau, d'autre part.

Le document FR-A-2.157.181 concerne un joint de cardan double. Les deux croisillons sont disposés dans un chapeau fermé; chaque croisillon possède un système de graissage. Par ailleurs, chaque croisillon est relié à une fourchette; l'articulation au centre se fait à l'aide d'une sphère pouvant se déplacer sur un tenon.

Le dispositif antérieur utilise des pièces monoblocs et l'inclinaison des arbres d'entrée et de sortie engendre un déplacement axial relatif de la sphère sur le tenon, la sphère étant maintenue dans un logement. Il n'enseigne pas un joint comportant un fourreau dans lequel la sphère est mobile.

Le document GB-A-2.098.888 concerne un procédé pour la fabrication d'un joint universel. La fabrication se fait à partir d'un élément plat qui est découpé, puis formé et percé pour obtenir un élément monobloc en tôle.

Il ne s'agit donc que d'un procédé de fabrication. Ce document ne fait aucunement état d'un double cardan avec pièce de liaison et pièces intermédiaires possédant une sphère, d'une part, et un élément femelle recevant un fourreau, d'autre part.

Le document GB-A-2.089.471 concerne un joint universel double. Les deux joints 28 sont maintenus à l'aide d'une pièce de liaison 20. Chaque joint possède une chape avec un secteur denté annulaire engrené au centre du joint de cardan. Ce dispositif possède par ailleurs un système de graissage avec soufflet.

Ce document ne divulgue aucunement le montage d'une sphère dans un fourreau.

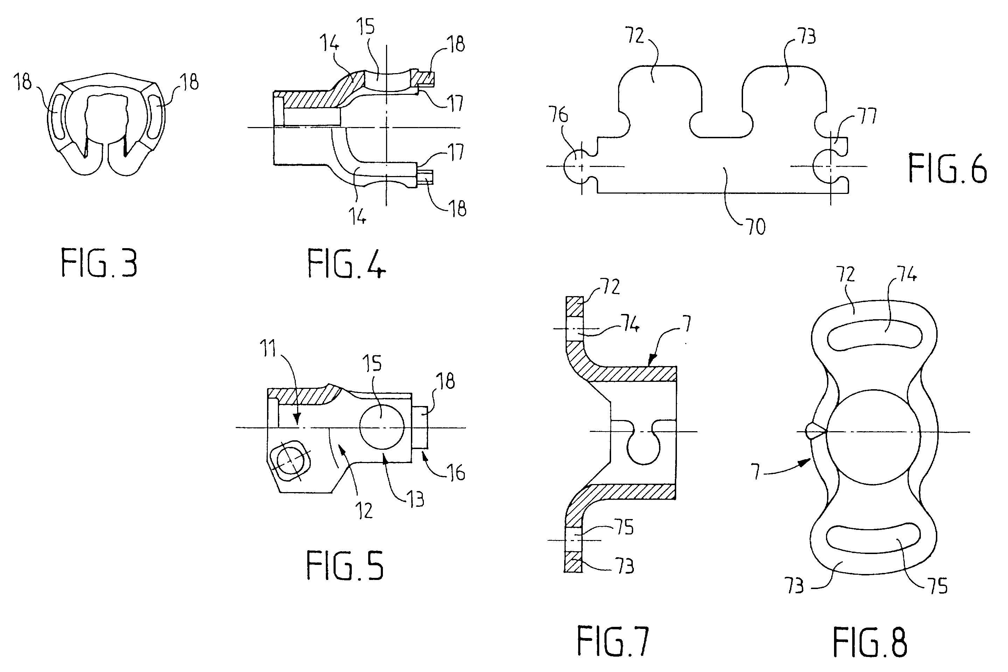

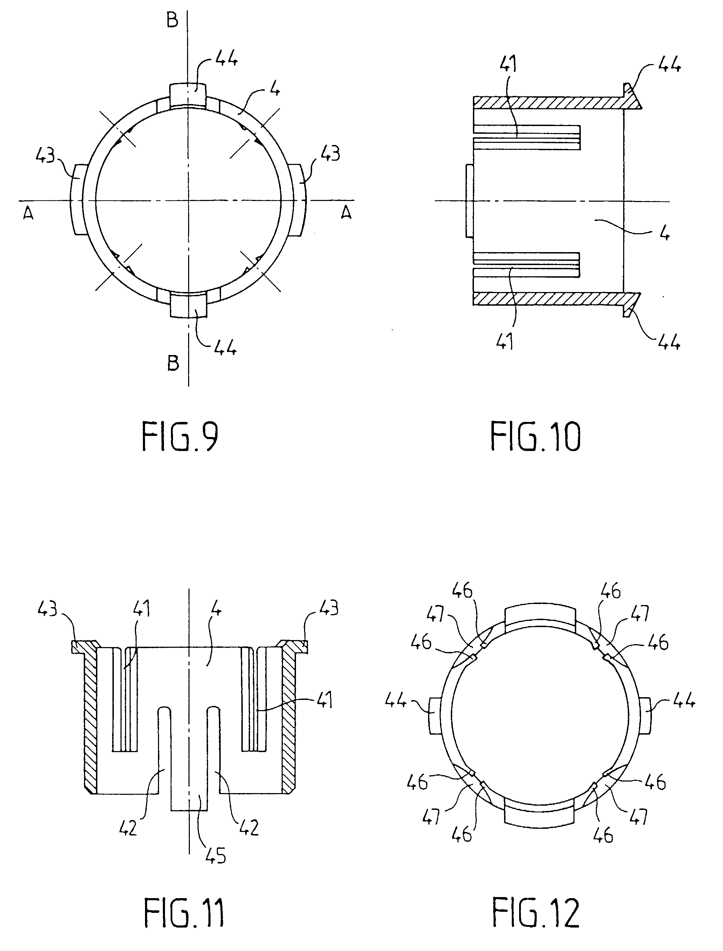

Le document US-A-3.029.618 concerne un joint universel du type joint de Hooke selon le préambule de la revendication 1. Ce joint comprend deux fourches destinées à être respectivement solidarisées à des arbres à relier, une fourche double intermédiaire et une partie avec boule disposée dans un manchon. Dans des modes de réalisation particuliers (figures 7 à 9), la partie avec boule s'engage dans une extension formant fourreau.

Les joints homocinétiques à rotule centrale connus nécessitent généralement une grande précision d'usinage, seule capable de diminuer les jeux de fonctionnement.

L'invention a pour but d'assouplir ces contraintes, en diminuant les jeux de fonctionnement tout en facilitant les usinages.

L'invention a aussi pour but de créer un joint homocinétique, à rotule centrale, dont l'encombrement réduit permet une application particulièrement avantageuse à une colonne de direction.

L'invention a pour objet un joint homocinétique, à rotule centrale, destiné à relier deux arbres, comprenant deux mâchoires d'extrémité reliées chacune du côté de la zone de liaison à l'un des arbres, chacune desdites mâchoires d'extrémité comportant deux ailes permettant de relier de l'autre côté lesdites mâchoires d'extrémité à une mâchoire centrale par l'intermédiaire de croisillons et une rotule centrale, rapportée, positionnée à l'extrémité des ailes des mâchoires d'extrémité, ladite rotule comprenant une sphère, étant portée par un support, mobile à l'intérieur d'un guide, lesdites mâchoires d'extrémité étant galbées au niveau de leur liaison avec le support de sphère et le guide de la rotule centrale, ledit guide contenant un fourreau rapporté à l'intérieur, la sphère portée par le support étant mobile à l'intérieur du guide dans le fourreau.

Selon l'invention, la liaison entre les mâchoires d'extrémité et la rotule centrale est réalisée par l'intermédiaire de tenons, de forme galbée, situés à l'extrémité des ailes des mâchoires d'extrémité, d'une part et de mortaises, de forme galbée correspondante, situées sur des pattes de support de sphère et sur des pattes du guide de la rotule centrale, d'autre part.

Dans le joint selon l'invention les ailes des mâchoires d'extrémité sont galbées au niveau de leur liaison avec le support de sphère et le guide de la rotule centrale, ce galbe conférant aux mâchoires un contour extérieur convexe. L'invention permet ainsi de réduire l'encombrement en rotation par rapport à celui qui est nécessaire dans le cas d'une aile ayant une extrémité rectiligne.

Dans des réalisations connues de joints de cardan, on trouve des mâchoires d'extrémité dont les ailes sont galbées en vue de l'amélioration du -positionnement et du maintien des cuvettes de roulement fixant le croisillon. Dans la présente invention, le galbe des mâchoires d'extrémité est utilisé dans un joint homocinétique, pour la fixation de la rotule centrale rapportée sur les mâchoires d'extrémité.

Dans une réalisation du joint de l'invention, le galbe de deux ailes d'au moins une des mâchoires est inscrit dans le volume correspondant à l'encombrement radial de ces deux ailes durant leur rotation. De cette façon, le galbe des deux ailes peut correspondre sensiblement à cet encombrement, ou, être plus prononcée que celui-ci. Cette dernière disposition permet encore d'améliorer le positionnement et le maintien des cuvettes de roulement, ou douilles, fixant le croisillon relativement aux ailes de la mâchoire, notamment si celle-ci est réalisée en tôle mince.

Dans une variante, le galbe des ailes des mâchoires d'extrémité est de forme sensiblement cylindrique.

La liaison entre les mâchoires d'extrémité et la rotule centrale permet de réaliser un sertissage, par écrasement local des tenons, et de solidariser définitivement les pièces entre elles. Elle contribue à la diminution des jeux de fonctionnement.

La sphère et le guide sont ajustés avec le jeu minimum que permettent les techniques de réalisation de ces pièces.

Selon la caractéristique de l'invention, un fourreau est rapporté à l'intérieur du guide de la rotule centrale. Ce fourreau comporte des nervures faisant saillie vers l'intérieur, qui permettent de réduire le jeu pouvant subsister entre le fourreau et la sphère de la rotule. Ces nervures, faisant saillie à l'intérieur du fourreau, se prolongeant axialement pour venir presser la sphère de la rotule centrale, quel que soit l'angle que font entre eux les deux arbres. La pression qu'elles exercent sur la sphère est suffisamment faible pour ne pas générer d'efforts trop importants, pouvant nuire au fonctionnement du joint homocinétique, mais suffisamment forte pour réduire le jeu subsistant entre la sphère et le fourreau. Ces nervures sont aussi suffisamment souples pour fléchir lorsqu'un effort est appliqué sur la sphère. Elles permettent que la surface de contact entre la sphère et le fourreau concerne un secteur important au lieu de se limiter aux seules arêtes de ces nervures. Grâce à cette augmentation de la surface de contact, le fourreau peu supporter des efforts plus importants pour une pression admissible au contact fourreau/sphère qui reste la même.

Selon cette réalisation, les nervures peuvent être placées par paires, en vis-à-vis, séparées par une fente.

Avantageusement, on prévoit un dégagement derrière chaque nervure. Ce dégagement, d'une part facilite le fléchissement des rainures lorsque la sphère appuie dessus, et, d'autre part, constitue un réservoir pour loger la graisse nécessaire à la lubrification du système.

La présente invention peut présenter diverses variantes de réalisation possédant chacune des avantages spécifiques.

Selon un mode de réalisation, le fourreau rapporté à l'intérieur du guide de la rotule centrale, comporte des fentes ouvertes à l'une de ses extrémités et des rainures ouvertes sur l'autre extrémité. Cette disposition permet ainsi au fourreau de se conformer au guide. Cette disposition de fentes et de rainures, aux ouvertures opposées, confère au fourreau une géométrie variable selon son diamètre permettant de compenser les dispersions de géométrie du guide.

Selon un autre mode de réalisation, le fourreau rapporté à l'intérieur du guide de la rotule centrale est maintenu en position par au moins un ergot, situé à l'extrémité d'une languette séparée du corps du fourreau par l'intermédiaire de deux rainures. Cet ergot permet de fixer par clipsage le fourreau à l'intérieur du guide, de façon à assurer un assemblage facile. L'ergot s'escamote lors du montage et reprend sa place lorsque le fourreau est positionné dans le guide.

Le fourreau peut par exemple être réalisé en matière thermoplastique, notamment un polyacétal, un polyamide ou un polypropylène (PP). Ces matières permettent d'obtenir par moulage des formes complexes, et ce, pour un coût faible. Elles concilient à la fois : un faible coût, une bonne tenue mécanique, une élasticité, une tenue en température et une bonne aptitude aux frottements. La matière thermoplastique, utilisée pour la fabrication du fourreau, peut aussi être un polytéréphtalate de butylène (PBTP), un polysulfure de phénylène (PPS) ou une polyéther éther cétone (PEEK). Ces matières sont particulièrement adaptées, dans le cas de températures de fonctionnement plus élevées.

Selon encore une autre forme de réalisation, le guide de la rotule centrale est réalisé en tôle métallique. Cette tôle peut être en acier ou en alliage d'aluminium. De telles matières permettent, à l'aide de procédés connus, d'obtenir la forme finale du guide de façon très économique.

Selon une autre variante de réalisation de l'invention, le guide de la rotule centrale comprend sur sa périphérie un système de fermeture, constitué de deux bords à conjugaison de forme. Dans cette variante, il est encore possible de renforcer le système de fermeture, par exemple par un sertissage ou une soudure.

Dans le cas d'un sertissage, celui-ci peut être constitué par écrasement ou enfoncement d'une empreinte dans la matière du guide. Cet écrasement, par exemple de 0,2 à 1 mm, tend à faire fluer la matière de façon à ce que les bords à conjugaison de forme, du système de fermeture, se joignent plus intimement. La forme de cette empreinte peut être quelconque, mais elles est, de préférence, ronde, carrée, triangulaire, ou rectangulaire, ou encore en croix, ou en étoile, ou même une ligne.

Le système de fermeture peut même être constitué par une soudure. Un tel système de fermeture permet de fixer la forme cylindrique du guide de la rotule centrale.

Selon un autre mode de réalisation de l'invention, les mâchoires d'extrémité sont réalisées en tôle épaisse. Elles peuvent aussi être réalisées en tôle mince ou en alliage métallique léger. Les mâchoires d'extrémité peuvent être réalisées par emboutissage, mais aussi par d'autres procédés, par exemple par roulage, par pliage, ou encore par moulage ou par filage. De façon préférée, le procédé de réalisation industrielle des mâchoires d'extrémité est la frappe à froid ou le filage par choc.

Dans une réalisation de l'invention, les mâchoires d'extrémité sont usinées à partir d'un tube.

Dans une forme de réalisation de l'invention, les mâchoires d'extrémité comprennent chacune une mâchoire à coulisse munie d'un système de serrage permettant de refermer les mâchoires sur les arbres destinés à être reliés. Ce dispositif permet de fixer le joint homocinétique sur les deux arbres, à relier, spécialement d'une colonne de direction, sans nécessité d'usinage particulier.

Selon une autre forme de réalisation de l'invention, au moins une des mâchoires d'extrémité est sertie sur l'un des arbres destinés à être reliés. Une réalisation équivalente consiste à assembler une mâchoire d'extrémité à l'un des arbres par soudage et/ou collage et/ou goupillage, ces divers modes d'assemblage pouvant être combinés. De façon préférée, cet assemblage est réalisé par une liaison crantée et/ou sertie.

Dans une réalisation particulière de l'invention, la zone de liaison d'au moins l'une des mâchoires d'extrémité est constituée par une mâchoire tube, formant moyeu. Cette mâchoire peut être reliée à l'un des arbres par l'intermédiaire d'un manchon en élastomère. Une telle disposition permet d'absorber une partie des vibrations.

Dans une autre réalisation de l'invention, au moins l'un des croisillons est relié à une mâchoire ayant deux ailes dont le galbe est plus prononcé que celui correspondant à la forme cylindrique de l'enveloppe décrite par la rotation des ailes de cette mâchoire. Ces ailes peuvent être celles d'une des mâchoires d'extrémités ou de la mâchoire centrale.

Dans le contexte de la présente description, on considère que les tôles dites épaisses ont une épaisseur d'environ 6 à 7 mm et que les tôles dites minces ont une épaisseur inférieure ou égale à environ 5 mm.

Typiquement, un procédé de fabrication d'un guide de rotule central de joint homocinétique, selon l'invention, comporte les étapes suivantes:
(a) découpe d'un flan;
(b) mise en forme du fourreau par emboutissage ou roulage ;
(c) mise en forme des pattes ;
(d) réalisation des mortaises par perçage, poinçonnage, alésage ou fraisage ;

Certaines de ces étapes peuvent être réalisées de façon simultanée.

Dans le cas où le système de fermeture du fourreau est renforcé par sertissage, cette opération est réalisée après l'étape (b) et avant l'étape (c).

Dans le cas où le système de fermeture du fourreau est renforcé par soudage, cette opération est réalisée après l'étape (c) et avant l'étape (d).

Le guide de rotule centrale peut être réalisé à partir d'une tôle travaillée de façon à lui donner la forme désirée. Le procédé d'emboutissage permet d'obtenir la forme finale de façon très économique.

Les autres pièces constituant le joint homocinétique peuvent être réalisées avec des matériaux et des procédés de fabrication classiques.

Selon un mode de réalisation de l'invention, l'assemblage du joint homocinétique comprend les étapes suivantes :
- mise en place du dispositif de serrage dans chacune des mâchoires d'extrémité,
- montage d'un croisillon dans chacune des mâchoires d'extrémité avec deux douilles à aiguilles,
- clipsage du fourreau à l'intérieur du guide,
- montage et sertissage du guide de rotule centrale sur une mâchoire d'extrémité,
- montage et sertissage de la sphère de la rotule centrale sur l'autre mâchoire d'extrémité,
- montage de l'ensemble précédent dans la mâchoire double avec deux douilles à aiguilles,
- montage de l'ensemble ainsi formé avec l'autre ensemble mâchoire d'extrémité / guide / fourreau / croisillon avec deux douilles à aiguilles, la sphère étant dans le même temps introduite dans le fourreau.

Le joint assemblé peut alors être fixé aux extrémités des deux arbres destinés à être reliés.

D'autres caractéristiques, buts et avantages, ressortiront de la description suivante, et des dessins annexés, qui présentent des exemples de réalisation de l'invention, sans caractère limitatif, sur lesquels :
- la Figure 1 est une coupe axiale présentant un joint homocinétique selon une forme de réalisation de l'invention ;
- la Figure 2 est une vue analogue à la Figure 1, après une rotation d'un quart de tour des arbres destinés à être reliés ;
- la Figure 3 est une vue de face d'une des mâchoires d'extrémité, du joint de la Figure 1 ;
- la Figure 4 est une vue de dessus avec une demi-coupe d'une mâchoire d'extrémité, selon la Figure 3 ;
- la Figure 5 est une vue de côté avec demi-coupe d'une mâchoire d'extrémité, selon la Figure 3 ;
- la Figure 6 représente la découpe d'un flan, développé, d'un guide de rotule centrale, pour un joint selon la Figure 1 ;
- la Figure 7 représente en coupe et en vue de côté, le guide de rotule centrale, pour un joint conforme à la Figure 1 ;
- la Figure 8 représente une vue arrière du guide de rotule centrale dont la partie cylindrique est fermée par une soudure ;
- la Figure 9 représente la vue de face du fourreau, pour un joint selon la Figure 1 ;
- la Figure 10 est une coupe selon la ligne BB de la Figure 9 ;
- la Figure 11 est une coupe selon la ligne AA de la Figure 9 ;
- la Figure 12 est une vue arrière du fourreau de la Figure 9 ;
- la Figure 13 est une vue de côté avec demi-coupe d'une autre forme de réalisation de mâchoire d'extrémité ;
- la Figure 14 est une vue de face d'une mâchoire d'extrémité, selon la Figure 13 ;
- la Figure 15 est une vue de dessus avec demi-coupe d'une mâchoire d'extrémité, selon la Figure 13 ;
- la Figure 16 est une vue de dessus avec demi-coupe d'une variante de mâchoire d'extrémité ;
- la Figure 17 est une vue de face d'une mâchoire d'extrémité selon la Figure 16 ;
- la Figure 18 est une vue de côté avec demi-coupe d'une mâchoire d'extrémité selon la Figure 16 ;
- la Figure 19 représente en coupe, vue de face, une forme de réalisation d'un guide de la rotule centrale ;
- la Figure 20 représente en vue de côté le guide de la rotule centrale selon la Figure 19 ;
- la Figure 21 représente en coupe et vue de face, une variante d'un guide de la rotule centrale ;
- la Figure 22 représente en vue de côté le guide de la rotule centrale selon la Figure 21 ;
- la Figure 23 représente en vue de dessus avec coupe et demi-coupe un exemple d'assemblage d'une mâchoire d'extrémité et d'un guide de rotule centrale ;
- la Figure 24 représente en vue de face l'assemblage de la mâchoire d'extrémité et du guide de rotule centrale selon la Figure 23 ;
- la Figure 25 représente en vue de dessus avec coupe et demi-coupe une variante de réalisation de l'assemblage d'une mâchoire d'extrémité et d'un guide de rotule centrale ;
- la Figure 26 représente en vue de face l'assemblage de la mâchoire d'extrémité et du guide de la rotule centrale selon la Figure 25 ;
- la Figure 27 représente une autre variante de réalisation de l'assemblage représenté à la Figure 26.

Dans ce qui suit, on décrit un joint homocinétique destiné à relier deux arbres, en particulier d'une colonne de direction. Un tel joint comprend de façon connue :
deux mâchoires d'extrémité 1 et 2, reliées respectivement d'un côté aux arbres (non représentés), comportant chacune deux ailes 14, 24 permettant de relier lesdites mâchoires d'extrémité 1, 2 de l'autre côté à une mâchoire 3 centrale par l'intermédiaire de deux croisillons 9 et 10, et une rotule 5 centrale, rapportée, positionnée à l'extrémité des ailes 14, 24 des mâchoires d'extrémité 1, 2, ladite rotule 5 comprenant une sphère 60, portée par un support 6, mobile à l'intérieur d'un guide 7.

Selon l'invention, les ailes 14, 24 des mâchoires d'extrémité 1, 2 sont galbées au niveau de leur liaison avec le support 6 de sphère et le guide 7 de la rotule 5 centrale.

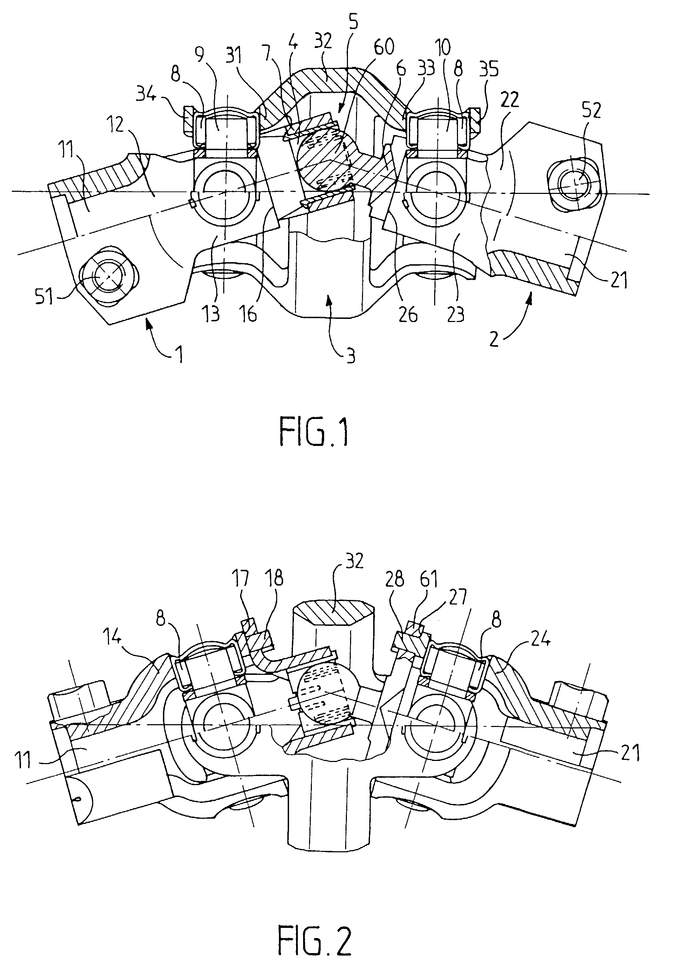

Les mâchoires d'extrémité 1, 2 comportent une zone de liaison 11, 21 avec un arbre, une zone intermédiaire 12, 22, et une zone de liaison 13, 23 avec les croisillons 9, 10. Comme on le voit aux Figures 1 et 2, la zone de liaison 11, 21 comprend à chaque extrémité une mâchoire à coulisse munie d'un système de blocage 51, 52. Les mâchoires à coulisse permettent de positionner le joint homocinétique sur les extrémités des deux arbres destinés à être reliés, sans nécessiter d'usinage compliqué. La zone de liaison 13, 23 avec le croisillon 9, 10 est constituée par une mâchoire à brides comportant deux ailes 14, 24, ou branches, munies chacune d'une ouverture 15 ou alésage circulaire, dans laquelle est placée une douille 8 à aiguilles. La mâchoire 3 centrale ou mâchoire intermédiaire, est composée de deux zones de liaison 31, 33 avec les croisillons 9, 10, reliées par une zone intermédiaire 32. Chaque zone de liaison 31, 33 avec un croisillon 9, 10 est constituée par une mâchoire à bride comprenant deux ailes 34, 35, ou branches, munie chacune d'une ouverture ou d'un alésage circulaire. Les mâchoires d'extrémité 1, 2 sont reliées à la mâchoire centrale 3 par l'intermédiaire de croisillons 9, 10 montés sur des douilles 8 positionnées dans les ailes 14, 24, 34, 35 des mâchoires. Une rotule 5 centrale, comportant une sphère 60, portée par un support 6, et un guide 7, est rapportée sur les zones de liaison 16, 26 situées aux extrémités des ailes 14, 24 des mâchoires d'extrémité 1, 2. Un fourreau 4 est rapporté à l'intérieur du guide 7 de la rotule 5 centrale.

La liaison entre les mâchoires d'extrémité 1, 2 et la rotule 5 centrale est réalisée par l'intermédiaire de tenons 18, 28, de forme galbée, situés à l'extrémité des ailes 14, 24 des mâchoires d'extrémité 1, 2, et de mortaises, de forme galbée correspondante, situées sur des pattes 61 du support 6 de la sphère 60 et sur des pattes 72, 73 du guide 7 de la rotule 5 centrale. Les pattes 61, 72, 73 du support 6 de sphère et du guide 7 de la rotule 5 centrale, viennent en butée sur des épaulements 17, 27 situés aux extrémités des ailes 14, 24 des mâchoires d'extrémité 1, 2. L'assemblage des mâchoires d'extrémité 1, 2 du guide 7 et du support 6 est maintenu par des écrasements réalisés par sertissage des tenons 18, 28. Les mâchoires d'extrémité 1, 2 peuvent être réalisées en tôle épaisse. Cette tôle est d'une épaisseur d'environ 6 mm à 7 mm. Les mâchoires d'extrémité peuvent aussi être réalisées en tôle mince avec une épaisseur d'environ 5 mm ou moins. Cette mâchoire d'extrémité permet de positionner le joint homocinétique, de l'invention, sur un arbre ayant un diamètre de 15 mm environ. L'encombrement de cette mâchoire s'inscrit dans un cylindre d'une longueur de 46 mm environ et d'un diamètre de 41 mm environ.

Les Figures 6, 7 et 8 représentent une forme particulière de réalisation du guide 7 de la rotule 5 centrale. Selon cette réalisation, le guide 7 de la rotule 5 centrale, comprend sur sa périphérie un système de fermeture constitué de deux bords 76, 77 ayant des formes conjuguées. Le guide 7 peut alors être fabriqué comme suit : découpe d'un flan 70, mise en forme par emboutissage ou roulage, renforcement éventuel du système de fermeture du fourreau par sertissage 78 (si sertissage), mise en forme des pattes 72, 73, renforcement éventuel du système de fermeture du fourreau par soudage (si soudage), réalisation des mortaises 74, 75 par perçage, poinçonnage ou alésage. Selon ce mode de réalisation, le système de fermeture est constitué par un système d'agrafes permettant de fermer solidement la forme cylindrique du guide 7.

Dans une forme particulière, ce système de fermeture est constitué par une soudure.

Dans une réalisation particulière, le guide 7 de la rotule 5 centrale, est réalisé en tôle métallique, d'acier ou d'alliage d'aluminium. Selon cette réalisation, le flan 70 peut être découpé dans une tôle d'acier d'une épaisseur de 3 mm.

Le fourreau 4 destiné à être rapporté à l'intérieur du guide 7 de la rotule 5 centrale, comporte des nervures 46 faisant saillie à l'intérieur dudit fourreau 4. Les nervures 46 sont placées par paire, en vis-à-vis, séparées par une fente 41. Un dégagement 47 est situé derrière chaque nervure 46. Ce dégagement 47 permet aux nervures 46 de pouvoir fléchir lorsque la sphère 60, du joint homocinétique, appuie dessus. Ce dégagement 47 permet aussi de constituer un logement pour la graisse nécessaire à la lubrification du système. Le fourreau 4, rapporté à l'intérieur du guide 7 de la rotule 5 centrale, comporte des fentes 41 ouvertes à l'une des extrémités du fourreau 4 et des rainures 42 ouvertes sur l'autre extrémité. Cette disposition permet ainsi au fourreau 4 de se conformer au guide 7 en compensant la dispersion sur les diamètres. Le fourreau 4 est maintenu en position sur le guide 7, par au moins un ergot 44 et un épaulement 43. L'ergot est situé à l'extrémité d'une languette 45. Cette languette 45 est séparée du corps du fourreau 4 par l'intermédiaire de deux rainures 42. Ces rainures 42 donnent à cette languette 45, comportant un ergot 44, une élasticité nécessaire à son escamotage, lors de la mise en place du fourreau 4 dans le guide 7.

Selon cette réalisation, le fourreau 4 est réalisé en matière thermoplastique par moulage. La matière peut être un polyacétal, un polyamide ou un polypropylène (PP). Dans le cas de température de fonctionnement plus élevée, des matières comme le polytéréphtalate de butylène (PBTP), le polysulfure de phénylène (PPS) ou la polyéther éther cétone (PEEK) peuvent être utilisées.

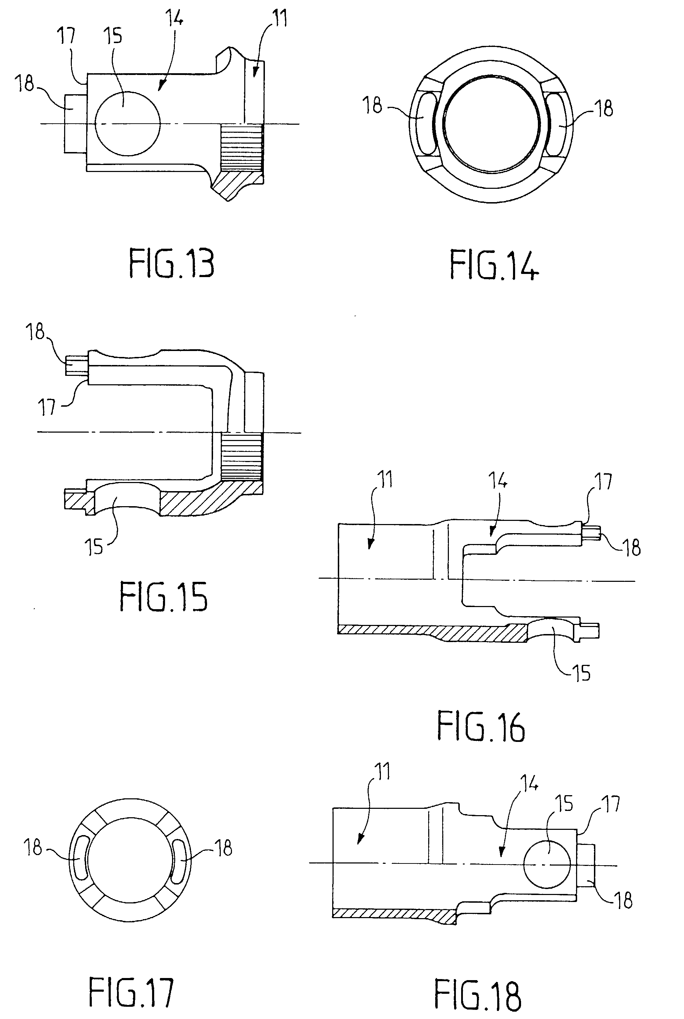

Les Figures 13, 14 et 15 représentent une réalisation particulière de mâchoire d'extrémité, et plus précisément de la zone de liaison 11 avec l'un des arbres. Cette zone est cannelée pour être assemblée sur un arbre comportant des cannelures conjuguées.

Les Figures 16, 17 et 18 représentent une autre variante de réalisation de mâchoire d'extrémité. Cette mâchoire peut être réalisée à partir d'un tube. La zone de liaison 11 avec l'un des arbres comprend un intérieur cylindrique. Cette mâchoire peut être assemblée de différentes façons avec l'arbre, par sertissage, soudage ou par l'intermédiaire d'un manchon élastomère.

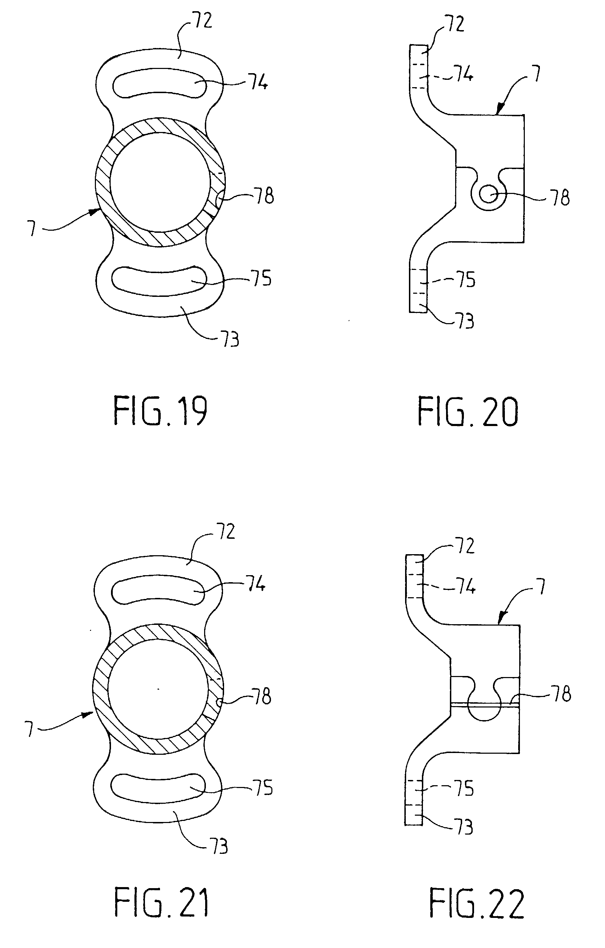

Les Figures 19, 20, 21 et 22 représentent des formes de réalisation particulières du renforcement du système de fermeture du guide 7 de la rotule centrale 5. Dans ces réalisations, le renforcement est constitué par un sertissage 78, de forme ronde dans les Figures 19 et 20, et en forme de ligne dans les Figures 21 et 22.

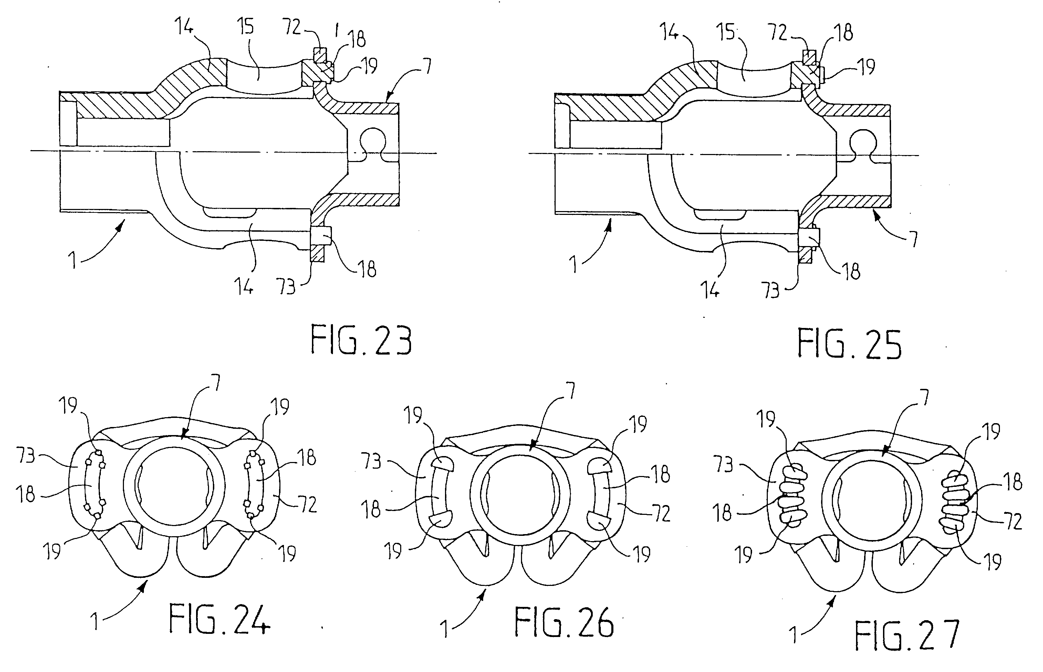

Les Figures 23, 24 d'une part, et 25, 26 et 27 d'autre part, représentent respectivement deux exemples de réalisation d'une liaison d'une mâchoire d'extrémité 1 avec le guide 7 de la rotule centrale, et plus précisément des sertissages 19 des tenons 18 de forme galbée permettant cette liaison. De façon avantageuse, ces sertissages 19 sont réalisés sur les extrémités latérales des tenons 18, après assemblage du guide 7 sur la mâchoire 1. Ces sertissages 19 peuvent correspondre à une surface recouvrant totalement ou partiellement le tenon 18 sur sa largeur. Il importe seulement d'obtenir un écrasement tendant à faire fluer la matière, de façon à recouvrir partiellement les pattes 72, 73 du guide, pour que les bords se joignent plus intimement, de façon à rigidifier l'assemblage. La liaison entre une mâchoire d'extrémité 2 et le support 6 de la sphère 60 de la rotule 5 centrale peut être réalisée de la même manière.

Plus particulièrement, on voit aux Figures 23 et 24 un mode de réalisation dans lequel les sertissages 19 sont réalisés sur les bords des tenons 18.

Aux Figures 25 et 26, les sertissages 19 recouvrent complètement les deux extrémités des tenons 18.

En variante, comme représenté à la Figure 27, une pluralité de sertissages 19 est réalisée transversalement sur chacun des tenons 18.

En fonctionnement, les deux arbres destinés à être reliés font, entre eux, un angle. Les arbres sont reliés au joint homocinétique par l'intermédiaire des mâchoires à coulisse des zones de liaison 11, 21 des mâchoires d'extrémité 1, 2. Ils sont maintenus en position grâce aux dispositifs de blocage 51, 52 . La puissance de l'arbre menant est transmise à l'arbre de sortie. Les efforts et les contraintes transmis passent successivement dans la mâchoire d'extrémité 1 ou 2 liée à l'arbre menant, un premier croisillon 9 ou 10, la mâchoire centrale 3, le second croisillon 9 ou 10, et l'autre mâchoire d'extrémité liée à l'arbre de sortie.

La rotule centrale impose un angle approximativement égal à la moitié de l'angle reliant les deux arbres, entre chacune des mâchoires d'extrémité 1, 2 et la mâchoire centrale 3.

Chaque croisillon tourne sur lui-même autour d'un point central.

L'axe de deux des tourillons du croisillon reste dans un plan perpendiculaire à l'axe de l'arbre lié à la mâchoire d'extrémité reliée audit croisillon. L'axe des deux autres tourillons du croisillon restent dans un plan perpendiculaire à l'axe défini par la mâchoire centrale 3. Le mouvement de rotation de chaque croisillon 9, 10, définit une enveloppe cylindrique. La forme galbée des ailes 14, 24, des mâchoires d'extrémité 1, 2, permet à celles-ci de rester à l'intérieur d'une enveloppe sensiblement équivalente à celle décrite précédemment, lors de la rotation des arbres. Cette forme galbée permet de réduire l'encombrement en rotation des mâchoires d'extrémité et donc de l'ensemble du joint homocinétique. Selon un mode de réalisation de l'invention, la sphère 60 de la rotule 5 centrale a un diamètre de 15 mm environ et l'encombrement global du joint homocinétique s'inscrit dans un cylindre d'une longueur de 13 cm environ et d'un diamètre de 6 cm environ.

Les signes de références insérés après les caractéristiques techniques mentionnées dans les revendications, ont pour seul but de faciliter la compréhension de ces dernières et n'en limitent aucunement la portée.

## Revendications

1. Joint homocinétique, à rotule centrale, destiné à relier deux arbres, comprenant deux mâchoires d'extrémité (1, 2) reliées chacune du côté de la zone de liaison (11, 21) à l'un des arbres, chacune desdites mâchoires d'extrémité comportant deux ailes (14, 24) permettant de relier de l'autre côté lesdites mâchoires d'extrémité (1, 2) à une mâchoire (3) centrale par l'intermédiaire de croisillons (9, 10) et une rotule (5) centrale, rapportée, positionnée à l'extrémité des ailes (14, 24) des mâchoires d'extrémité (1, 2), ladite rotule (5) comprenant une sphère (60), étant portée par un support (6), mobile à l'intérieur d'un guide (7), lesdites mâchoires d'extrémité (1, 2) étant galbées au niveau de leur liaison avec le support (6) de sphère et le guide (7) de la rotule (5) centrale, ledit guide (7) contenant un fourreau (4) rapporté à l'intérieur, la sphère (60) portée par le support (6) étant mobile à l'intérieur du guide (7) dans le fourreau (4), caractérisé en ce que la liaison entre les mâchoires d'extrémité (1, 2) et la rotule (5) centrale est réalisée par l'intermédiaire de tenons (18, 28) de forme galbées, situés à l'extrémité des ailes (14, 24) des mâchoires d'extrémité et de mortaises, de forme galbée, correspondantes situées sur des pattes (61) du support (6) de sphère (60) et sur des pattes(72, 73) du guide (7) de la rotule (5).

2. Joint homocinétique selon la revendication 1, caractérisé en ce que le fourreau (4) comporte des nervures (46) faisant saillie à l'intérieur dudit fourreau (4).

3. Joint homocinétique selon la revendication 2, caractérisé en ce que lesdites nervures (46) sont placées par paires en vis-à-vis, séparées par une fente (41).

4. Joint homocinétique selon l'une des revendications 2 ou 3, caractérisé en ce qu'un dégagement (47) est situé derrière chaque nervure (46) du fourreau (4).

5. Joint homocinétique selon la revendication 1, caractérisé en ce que ledit fourreau (4) comporte des fentes (41) ouvertes à l'une des extrémités du fourreau (4) et des rainures (42) ouvertes sur l'autre extrémité.

6. Joint homocinétique selon la revendication 1, caractérisé en ce que ledit fourreau (4) est situé à l'extrémité d'une languette (45) séparée du corps du fourreau (4) par l'intermédiaire de deux rainures (42), et d'au moins un épaulement (43.).

7. Joint homocinétique selon l'une des revendications précédentes, caractérisé en ce que le fourreau (4) est réalisé en matière thermoplastique telle que:
- polyacétal, polyamide, polypropylène (PP), polytéréphtalate de butylène (PBTP), polysulfure de phénylène (PPS), polyéther éther cétone (PEEK).

8. Joint homocinétique selon l'une des revendications précédentes, caractérisé en ce que le guide (7) de la rotule (5) centrale est réalisé en tôle métallique.

9. Joint homocinétique selon l'une des revendications précédentes, caractérisé en ce que le guide (7) de la rotule (5) centrale est fermé par une soudure.

10. Joint homocinétique selon l'une des revendications précédentes, caractérisé en ce que le guide (7) de la rotule (5) centrale comprend sur sa périphérie un système de fermeture constitué de deux bords (76, 77) ayant des formes conjuguées.

11. Joint homocinétique selon la revendication 10, caractérisé en ce que le système de fermeture est renforcé, par exemple par un sertissage ou une soudure.

12. Joint homocinétique selon l'une des revendications précédentes, caractérisé en ce que les mâchoires d'extrémité (1, 2) sont réalisées en tôle épaisse, ou en tôle avec une épaisseur inférieure ou égale à 5 mm.

13. Joint homocinétique selon l'une des revendications précédentes, caractérisé en ce que les mâchoires d'extrémité (1, 2) sont réalisées par emboutissage, roulage, pliage, moulage ou filage, usinées à partir d'un tube, et de préférence par frappe à froid ou filage par choc.

14. Joint homocinétique selon l'une des revendications précédentes, caractérisé en ce qu'au moins une des zones de liaison (11, 21) des mâchoires d'extrémité (1, 2) avec les arbres destinés à être reliés comprend une mâchoire à coulisse munie d'un dispositif de blocage, ou une mâchoire à intérieur cylindrique, ou une mâchoire sertie, ou une mâchoire soudée, ou une mâchoire formant moyeu et reliée à l'un des arbres par l'intermédiaire d'un manchon en élastomère.

## Patentansprüche

1. Homokinetisches Gelenk mit zentralem Kugelgelenk, das dazu bestimmt ist, zwei Wellen miteinander zu verbinden, enthaltend zwei Endklemmen (1, 2), die jeweils auf der Seite des Verbindungsbereiches (11, 21) mit einer der Wellen verbunden sind, wobei jede dieser Endklemmen zwei Flügel (14, 24), die es ermöglichen, auf der anderen Seite diese Endklemmen (1, 2) mit einer zentralen Klemme (3) mit Hilfe von Kreuzzapfen (9, 10) zu verbinden, und ein zentrales Kugelgelenk (5) umfaßt, das am Ende der Flügel (14, 24) der Endklemmen (1, 2) aufgesetzt positioniert ist, wobei das Kugelgelenk (5) eine Kugel (60) aufweist, die von einer innerhalb einer Führung (7) beweglichen Stütze (6) getragen wird, wobei die Endklemmen (1, 2) im Bereich ihrer Verbindung mit der Stütze (6) der Kugel und der Führung (7) des zentralen Kugelgelenks (5) bombiert sind, wobei die Führung (7) eine Gleithülse (4) umfaßt, die innen aufgesetzt ist, wobei die Kugel (60), die von der Stütze (6) getragen wird, im Inneren der Führung (7) in der Gleithülse (4) beweglich ist, dadurch gekennzeichnet, daß die Verbindung zwischen den Endklemmen (1, 2) und dem zentralen Kugelgelenk (5) mit Hilfe von Zapfen (18, 28) mit bombierter Form, die sich am Ende der Flügel (14, 24) der Endklemmen befinden, und von entsprechenden Zapfenlöchern bombierter Form durchgeführt wird, die sich auf Befestigungseisen (61) der Stütze (6) der Kugel (60) und auf Befestigungseisen (72, 73) der Führung (7) des Kugelgelenks (5) befinden.

2. Homokinetisches Gelenk nach Anspruch 1, dadurch gekennzeichnet, daß die Gleithülse (4) Rippen (46) umfaßt, die im Inneren der Gleithülse (4) vorspringen.

3. Homokinetisches Gelenk nach Anspruch 2, dadurch gekennzeichnet, daß die Rippen (46), durch einen Spalt (41) voneinander getrennt, sich paarweise gegenüberliegend angeordnet sind.

4. Homokinetisches Gelenk nach einem der Ansprüche 2 oder 3, dadurch gekennzeichnet, daß ein Freiraum (47) hinter jeder Rippe (46) der Gleithülse (4) angeordnet ist.

5. Homokinetisches Gelenk nach Anspruch 1, dadurch gekennzeichnet, daß die Gleithülse (4) Spalte (41), die an einem der Enden der Gleithülse (4) offen sind, und Nuten (42) umfaßt, die am anderen Ende offen sind.

6. Homokinetisches Gelenk nach Anspruch 1, dadurch gekennzeichnet, daß die Gleithülse (4) am Ende einer Zunge (45) angeordnet ist, die vom Körper der Gleithülse (4) durch zwei Nuten (42) und mindestens einen Ansatz (43) getrennt ist.

7. Homokinetisches Gelenk nach einem der vorgehenden Ansprüche, dadurch gekennzeichnet, daß die Gleithülse (4) aus einem thermoplastischen Material hergestellt ist, wie beispielsweise:
- Polyazetal, Polyamid, Polypropylen (PP), Polybutylenterephthalat (PBTP), Polyphenylsulfid (PPS), Etherketonpolyether (PEEK).

8. Homokinetisches Gelenk nach einem der vorgehenden Ansprüche, dadurch gekennzeichnet, daß die Führung (7) des zentralen Kugelgelenks (5) aus Metallblech hergestellt ist.

9. Homokinetisches Gelenk nach einem der vorgehenden Ansprüche, dadurch gekennzeichnet, daß die Führung (7) des zentralen Kugelgelenks (5) durch eine Schweißnaht geschlossen ist.

10. Homokinetisches Gelenk nach einem der vorgehenden Ansprüche, dadurch gekennzeichnet, daß die Führung (7) des zentralen Kugelgelenks (5) an ihrem Umfang ein Verschlußsystem umfaßt, das von zwei Rändern (76, 77) mit konjugierten Formen gebildet ist.

11. Homokinetisches Gelenk nach Anspruch 10, dadurch gekennzeichnet, daß das Verschlußsystem beispielsweise durch eine Bördelverbindung oder eine Schweißnaht verstärkt ist.

12. Homokinetisches Gelenk nach einem der vorgehenden Ansprüche, dadurch gekennzeichnet, daß die Endklemmen (1, 2) aus dickem Blech oder aus einem Blech mit einer Dicke von kleiner oder gleich 5 mm hergestellt sind.

13. Homokinetisches Gelenk nach einem der vorgehenden Ansprüche, dadurch gekennzeichnet, daß die Endklemmen (1, 2) durch Ziehen, Rollen, Falten, Gießen oder Pressen aus einem Rohr hergestellt sind, vorzugsweise durch Kaltprägen oder Stoßpressen.

14. Homokinetisches Gelenk nach einem der vorgehenden Ansprüche, dadurch gekennzeichnet, daß mindestens einer der Verbindungsbereiche (11, 21) der Endklemmen (1, 2) mit den Wellen, die dazu bestimmt sind, miteinander verbunden zu werden, eine Klemme mit Gleitschiene, die mit einer Feststellvorrichtung versehen ist, oder eine Klemme mit zylindrischer Innenfläche oder eine gebördelte Klemme oder eine geschweißte Klemme oder eine Klemme, die eine Nabe bildet und mit einer der Wellen mit Hilfe einer Elastomer-Hülse verbunden ist, umfaßt.

## Claims

1. A homokinetic joint, with a centre ball, designed for linking two shafts, comprising two end jaws (1, 2) each connected on the side of the linking zone (11, 21) to one of the shafts, each of the said end jaws comprising two wings (14, 24) enabling to link on the other side, the said end jaws (1, 2) to a centre jaw (3) via cross-pieces (9, 10) and a centre ball (5), inserted, positioned at the end of the wings (14, 24) of the end jaws (1, 2), the said ball (5) comprising a sphere (60) being carried by a support (6), mobile inside a guide (7), the said end jaws (1, 2) being curved at the level of their link with the support (6) of the sphere and the guide (7) of the centre ball (5), the said guide (7) comprising a sleeve (4) inserted inside, the sphere (60) carried by the support (6) being mobile inside the guide (7) in the sleeve (4), characterized in that the link between the end jaws (1, 2) and the centre ball (5) is secured by tenons (18, 28) of curved shape, located at the end of the wings (14, 24) of the end jaws and by mortises, of a corresponding curved shape, located on lugs (61) of the support (6) of the sphere (60) and on lugs (72, 73) of the guide (7) of the ball (5).

2. A homokinetic joint according to claim 1, characterized in that the sleeve (4) comprises ribs (46) protruding inside the said sleeve (4).

3. A homokinetic joint according to claim 2, characterized in that the said ribs (46) are located by pairs, opposite to each other, separated by a slot (41).

4. A homokinetic joint according to any of claims 2 or 3, characterized in that a clearance (47) is provided behind each rib (46) of the sleeve (4).

5. A homokinetic joint according to claim 1, characterized in that the sleeve (4) comprises slots (41) opened on one of the ends of the sleeve (4) and grooves (42) opened on the other end.

6. A homokinetic joint according to claim 1, characterized in that the sleeve (4) is provided at the end of a tongue (45) separated from the body of the sleeve (4) by two grooves (42) and at least one shoulder (43).

7. A homokinetic joint according to any of the preceding claims, characterized in that the sleeve is made of a thermoplastic material such as :
- polyacetal, polyamide, polypropylene (PP), butylene polyterephthalate (PBTP), phenylene polysulphide (PPS), ketone-ether-polyether (PEEK).

8. A homokinetic joint according to any of the preceding claims, characterized in that the guide (7) of the centre ball (5) is made of metal sheet.

9. A homokinetic joint according to any of the preceding claims, characterized in that the guide (7) of the centre ball (5) is closed by welding.

10. A homokinetic joint according to any of the preceding claims, characterized in that the guide (7) of the centre ball (5) comprises on its circumference a closing device made of two edges (76, 77) with conjugated forms.

11. A homokinetic joint according to claim 10, characterized in that the closing device is reinforced, for example by crimping or by welding.

12. A homokinetic joint according to any of the preceding claims, characterized in that the end jaws (1, 2) are made of thick metal sheet, or of metal sheet approximately 5 mm or less in thickness.

13. A homokinetic joint according to any of the preceding claims, characterized in that the end jaws (1, 2) are made by embossing, rolling, folding, moulding or extrusion, machined out of a tube and preferably by cold hammering or impact extrusion.

14. A homokinetic joint according to any of the preceding claims, characterized in that at least one linking zone (11, 21) of the end jaws (1, 2) with the shafts designed to be linked, comprises a sliding jaw provided with a locking device or a jaw with a cylindrical interior or a crimped jaw or a welded jaw or a jaw forming a hub and linked to one of the shafts by an elastomer sleeve.
